# FASCICULE DE BREVET EUROPEEN

(11) **EP 2 904 657 B1**
(45) Date de publication et mention de la délivrance du brevet: **13.06.2018**
(21) Numéro de dépôt: 13782779.6
(22) Date de dépôt: 02.10.2013
(51) Int. Cl.: H01M 8/0273, H01M 8/0276, H01M 8/2483, H01M 8/0284, H01M 8/0286

(54) **DISPOSITIF D'ÉTANCHÉITÉ POUR PILE À COMBUSTIBLE, CELLULE ET UNE PILE À COMBUSTIBLE COMPRENANT UN TEL DISPOSITIF**
DICHTHEITSVORRICHTUNG FÜR BRENNSTOFFZELLE UND BRENNSTOFFZELLE MIT EINER SOLCHEN VORRICHTUNG
LEAKPROOFING DEVICE FOR FUEL CELL, UNIT AND FUEL CELL COMPRISING SUCH A DEVICE

(30) Priorité: 03.10.2012 FR 1259363
(43) Date de publication de la demande: 12.08.2015
(73) Titulaire: L'Air Liquide Société Anonyme pour l'Etude et l'Exploitation des Procédés Georges Claude, 75007 Paris (FR)
(72) Inventeur: CERCEAU, Arnaud, F-38850 Charavines (FR); GUINEBERT, Alain, F-38210 Tullins (FR); JANNIN, Nicolas, F-38240 Meylan (FR); ROSSINOT, Elisabeth, F-38112 Meaudre (FR); TROUVE, Hélène, F-38360 Sassenage (FR); SIRAC, Denis, F-38430 Moirans (FR)
(74) Mandataire: De Cuenca, Emmanuel Jaime
(86) Numéro de dépôt international: PCT/FR2013/052342
(87) Numéro de publication internationale: WO 2014/053770

(56) Documents cités:
- WO-A1-2011/158624
- JP-A- 2012 221 559
- US-A1- 2008 305 384
- US-A1- 2011 305 967

## Description

La présente invention concerne un dispositif d'étanchéité pour pile à combustible ainsi qu'une cellule et une pile à combustible comprenant un tel dispositif.

Une pile à membrane échangeuse de protons est un assemblage (empilement appelé « Stack ») d'un nombre déterminé de cellules élémentaires.

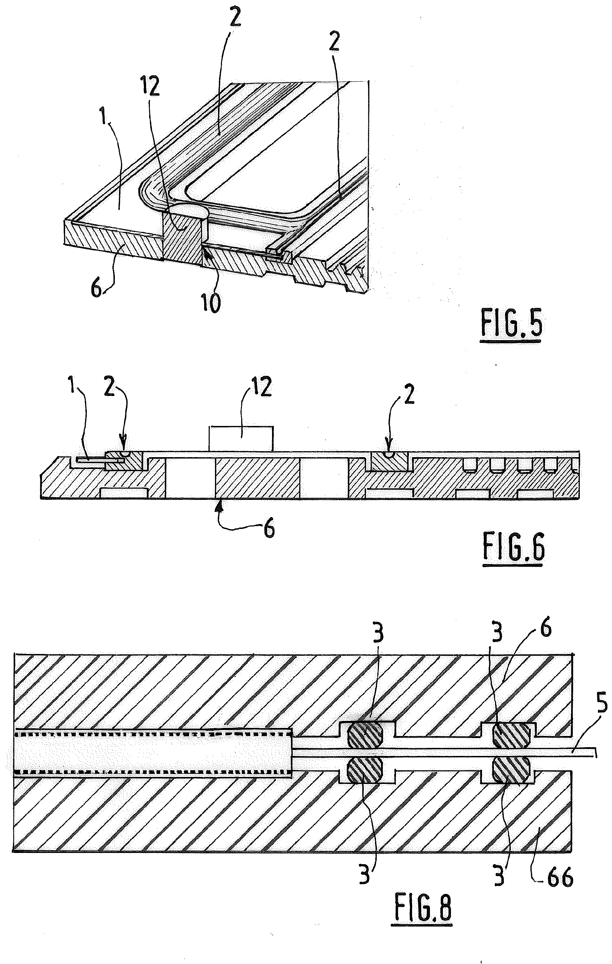

Comme illustré schématiquement à la figure 8, une cellule élémentaire comprend généralement un empilement qui contient les éléments suivants :
- des plaques anodique 6 et cathodique 66,
- un Assemblage Membrane Electrodes (AME) 5,
- un système d'étanchéité 3 du côté du réseau de distribution du carburant (hydrogène gazeux),
- un système d'étanchéité 3 du côté du réseau de distribution de comburant (air).
- un système d'étanchéité d'un réseau de distribution de fluide de refroidissement (liquide ou air) (non visible à la figue 8 par soucis de simplification),

L'empilement est mis en compression afin d'assurer d'une part l'étanchéité des cellules mais également afin de comprimer l'assemblage membrane électrodes (« AME ») à un taux de compression optimum pour le fonctionnement de la cellule. Le maintien en pression est généralement assuré par des éléments d'extrémité ou des tirants.

Les cellules de piles à combustibles nécessitent des joints pour assurer l'étanchéité des divers réactifs gazeux ou liquides ainsi que du fluide de refroidissement.

Ces joints doivent satisfaire à différentes contraintes parmi lesquelles :
- être facilement manipulables pour le montage/démontage,
- permettre un positionnement relatif précis entre l'Assemblage Membrane Electrodes et la plaque de pile correspondante (polaire ou bipolaire),
- ne pas polluer l'assemblage membrane électrodes,
- résister à l'environnement ambiant (réactifs, pression température...)...

Le coût de tels joints doit également être compatible avec les contraintes économiques.

Les solutions connues de dispositifs d'étanchéité pour piles à combustible sont multiples. Ainsi, par exemple, il est connu de réaliser un surmoulage d'un joint directement sur les plaques de la pile. Il est également connu de réaliser des plaques bipolaires par injection du matériau d'étanchéité. Ces solutions ne permettent cependant pas une maintenance aisée des assemblages membrane électrodes ou du dispositif d'étanchéité lui-même. En effet, en cas de défaillance de l'étanchéité, la plaque avec son joint doivent être remplacées entrainant un surcoût de maintenance.

Le document US6231053 décrit un dispositif d'étanchéité solidaire de l'Assemblage Membrane Electrodes (AME) qui comprend une feuille rigide sur laquelle est vulcanisé un joint souple, le joint étant également vulcanisé sur l'AME.

Ce dispositif ne satisfait cependant pas suffisamment les contraintes ci-dessous, notamment en ce que concerne la facilité de maintenance différenciée des AME et du système d'étanchéité. En effet, en cas de défaillance de l'étanchéité, l'AME avec son joint doivent être remplacés entrainant un surcout de maintenance. Il en est de même en cas de défaillance du coeur de pile.

Le document US2008/0305384 décrit une cellule conforme au préambule de la revendication 1. L'invention est caractérisée en ce que le dispositif comprend une pluralité d'ouvertures périphériques formées autour d'une ouverture centrale, l'ouverture centrale étant destinée à être superposée à une surface active d'un Assemblage Membrane Electrodes, au moins une partie de la bordure délimitant l'ouverture centrale étant commune avec des bordures respectives des ouvertures périphériques et en ce que les portions de la bordures communes à l'ouverture centrale et aux ouvertures périphériques sont constituée uniquement d'un cordon d'étanchéité. Une autre solution connue consiste à prévoir des joints souples indépendants possédant des systèmes d'attache afin de les maintenir sur les plaques lors de l'assemblage. Cette solution augmente cependant considérablement le temps de montage. De plus, lors du montage, le joint peut vriller et ainsi menacer la fiabilité du montage.

L'industrialisation du procédé de fabrication des piles à combustible et la nécessité de réduire les coûts de fabrication nécessitent la réduction du temps de montage de l'ensemble tout en garantissant une bonne fiabilité.

Un but de la présente invention est de pallier tout ou partie des inconvénients de l'art antérieur relevés ci-dessus.

En particulier, un but de la présente invention est de proposer un dispositif d'étanchéité pour pile à combustible satisfaisant à tout ou partie des contraintes ci-dessous :
- le dispositif d'étanchéité doit pouvoir être facilement manipulé manuellement ou de façon automatique,
- permettre le positionnement et le maintien d'un joint dans une gorge de joint,
- permettre un stockage, un emballage et une préparation aisés pour les étapes de montage,
- le dispositif d'étanchéité doit pouvoir être positionnable sur une pièce ne disposant pas de gorge de joint (tel que sur l'Assemblage Membrane Electrodes),
- permettre l'assemblage et la mise en compression de l'empilement de cellules,
- assurer l'étanchéité des réseaux de distribution et d'évacuation des fluides les uns des autres et par rapport à l'extérieur,
- permettre la maintenance cellule par cellule des AME et la réutilisation des éléments de l'empilement,
- réduire le nombre de dispositifs d'étanchéité différents par cellule,
- permettre l'alignement de l'AME par rapport à la plaque, et l'alignement de la plaque par rapport à l'AME,

A cette fin, le dispositif d'étanchéité pour pile à combustible, destiné à être interposé entre un Assemblage Membrane Electrodes et une plaque polaire ou bipolaire d'une cellule de pile à combustible, est constitué d'un cadre rigide et d'un cordon d'étanchéité solidaire du cadre, le cadre muni du cordon d'étanchéité définissant une pluralité d'ouvertures au travers du dispositif, les ouvertures étant délimitées par le cordon d'étanchéité.

Par ailleurs, des modes de réalisation de l'invention peuvent comporter l'une ou plusieurs des caractéristiques suivantes :
- le cadre comprend en outre des trous de serrage prévus pour le passage d'un système de serrage tel que des tirants,
- le cadre comprend en outre des trous de centrage et des pions de centrage, les pions de centrages étant perpendiculaires au plan du cadre et étant destinés à coopérer avec des trous de centrage conjugués d'un élément adjacent tel qu'un assemblage Membrane Electrodes, et éventuellement avec des logements d'une plaque anodique ou cathodique, les trous de centrage étant prévus pour accueillir les pions de centrage du cadre d'un dispositif d'étanchéité adjacent de la même cellules de pile à combustible,
- le dispositif comporte des portions de cordon d'étanchéité de part et d'autre du plan défini par le cadre et, en section selon un plan perpendiculaire au plan du cadre, le cadre étant situé entre les extrémités du cordon d'étanchéité situées de part et d'autre du plan du cadre,
- en section selon un plan perpendiculaire au plan du cadre, le cadre est situé à mi-épaisseur du cordon d'étanchéité,
- au moins une partie d'un bord délimitant au moins une ouverture est constituée uniquement d'un cordon d'étanchéité,
- le cordon d'étanchéité comprend un joint dur ou mou, par exemple un joint déformable élastiquement ou plastiquement,
- le cadre est plan ou non,
- le cadre rigide plan ou non comprend des nervures de rigidification,
- l'épaisseur du cadre rigide est comprise entre 0,1 et 0,9 mm et de préférence entre 0,2 et 0,5mm,
- l'épaisseur du cordon d'étanchéité (selon une direction perpendiculaire au plan du cadre) et comprise entre 0,4.mm et 4 mm et de préférence entre 1 et 1,5 mm et encore plus préférentiellement entre 1,20mm et 1,30mm,
- la largueur du cordon d'étanchéité (selon une direction parallèle au plan du cadre) et comprise entre 1,5.mm et 2,5mm et de préférence entre 2mm et 2,35 mm,
- en section transversale le cadre rigide est centré dans le cordon d'étanchéité de façon à ne pas déborder dans les collecteurs de la cellule en position assemblée.

L'invention concerne également une cellule élémentaire de pile à combustible comprenant deux plaques de pile polaires ou bipolaires prenant en sandwich un Assemblage Membrane Electrodes, la cellule comprenant deux dispositifs d'étanchéité disposés respectivement de part et d'autre de l'Assemblage Membrane Electrodes et en vis-à-vis d'une plaque correspondante, pour assurer la séparation étanche des circuits de fluides réactifs au niveau de la cellule et assurer un écartement déterminé au sein de la cellule.

Selon des modes de réalisations possibles :
- la cellule comprend deux plaques de pile polaires, utilisant au moins un dispositif d'étanchéité positionné entre les deux faces des plaques dédiées au refroidissement,
- les deux dispositifs d'étanchéité sont de structure identique,
- les deux dispositifs d'étanchéité sont solidaires au niveau d'une jonction souple pliable,
- les deux dispositifs d'étanchéité sont rendus solidaires au niveau d'une jonction démontable,
- les périphéries des plaques situées en vis-à-vis présentent chacune une découpe, par exemple biseautée, au niveau de la bordure de l'AME,
- dans le plan du cadre, le cadre et le cordon d'étanchéité sont symétriques par rapport au centre du cadre.

L'invention concerne également une pile à combustible, notamment du type à membrane échangeuse de protons, comprenant un empilement de plusieurs cellules élémentaires conformes à l'une quelconque des caractéristiques ci-dessus ou ci-après.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de dessus d'un dispositif d'étanchéité selon un exemple de réalisation possible de l'invention,
- la figure 2 représente une vue de dessus d'un détail du dispositif d'étanchéité de la figure 1 illustrant uniquement son cadre rigide,
- la figure 3 représente une vue en perspective d'un détail du dispositif d'étanchéité de la figure 1 illustrant uniquement le cordon d'étanchéité (de type joint dur ou mou) et des pions de centrage,
- la figure 4 représente une vue en perspective, schématique et partielle, illustrant un exemple d'empilement de cellule de pile à combustible selon une réalisation possible de l'invention,
- la figure 5 représente une vue en perspective d'un détail du dispositif d'étanchéité de la figure 1 monté sur une plaque de pile,
- la figure 6 représente une vue ne coupe d'un détail d'un détail du dispositif d'étanchéité de la figure 1 monté sur une plaque de pile,
- la figure 7 illustre une vue en coupe d'une cellule de pile à combustible munie d'un dispositif d'étanchéité selon l'invention de part et d'autre de la membrane échangeuse de proton,
- la figure 8 illustre schématiquement un exemple d'architecture de cellule de pile à combustible pouvant mettre en oeuvre l'invention,
- la figure 9 illustre une vue en coupe d'une cellule de pile à combustible munie d'un dispositif d'étanchéité selon l'invention illustrant l'agencement d'un pion de centrage.

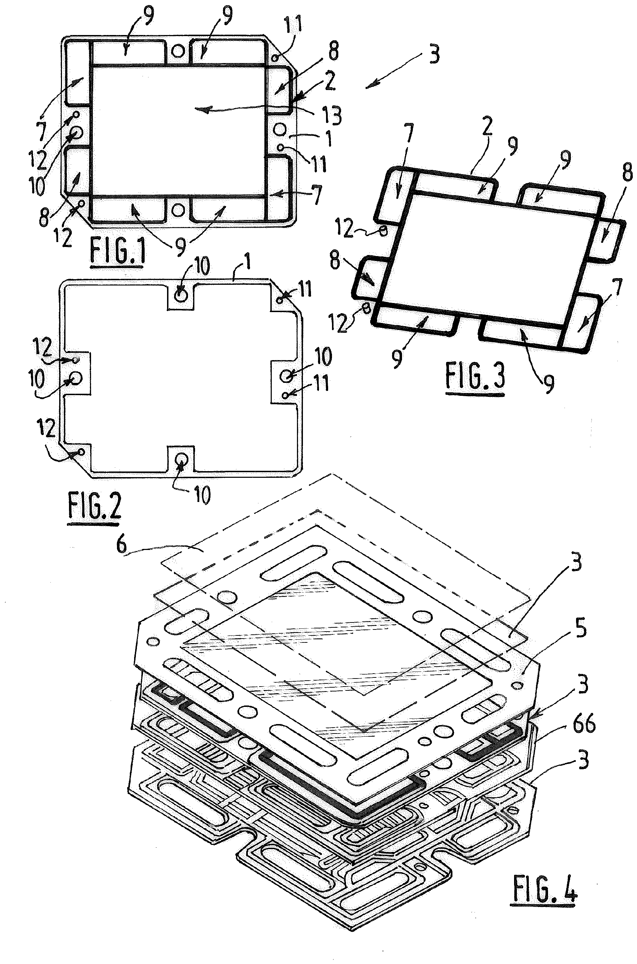

Le dispositif d'étanchéité illustré à la figure 1 comprend un cadre 1 préférentiellement rigide (peut-être ductile) de forme générale plane (cf. figure 2). Le cadre 1 est constitué par exemple de l'un au moins des matériaux suivants : un élastomère, un thermoplastique, un thermodurcissable, un élastomère thermoplastique , un métal, un alliage, du graphite. De préférence, le cadre 1 a une épaisseur inférieure à 3mm. Par exemple, le cadre 1 a une épaisseur comprise entre 0,1 et 0.5 mm et de préférence 0,2mm. Comme illustré, le cadre 1 peut avoir une forme sensiblement carrée. Un cordon 2 d'étanchéité est surmoulé sur le cadre 1 (cf. figure 3).

Le cordon 2 d'étanchéité est constitué par exemple de l'un au moins parmi : un élastomère, un thermoplastique, un thermodurcissable, un élastomère thermoplastique. De préférence, le cordon 2 d'étanchéité est surmoulé de part et d'autre du cadre 1 (cf. figures 5 et 6).

Comme visible aux figures 5 et 6, le cordon 2 d'étanchéité peut être profilé afin de faciliter sa compression. Par exemple, le cordon 2 d'étanchéité peut avoir une forme du type à double lèvres.

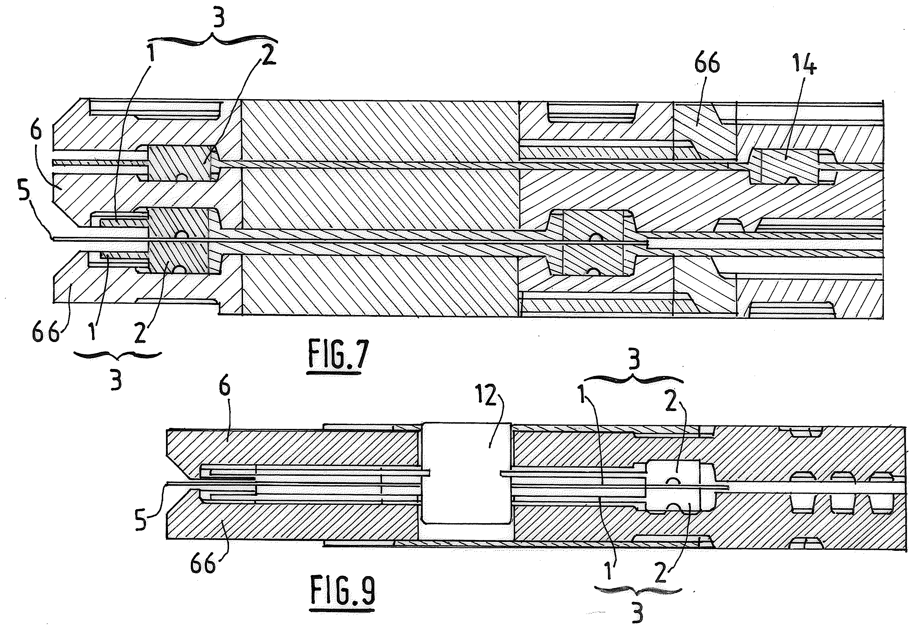

La figure 7 illustre une vue en coupe d'une cellule de pile à combustible dans laquelle deux plaques 6, 66 de pile prennent en sandwich un AME (Assemblage Membrane Electrode) 5. Un dispositif d'étanchéité 3 est disposé de part et d'autre de l'Assemblage Membrane Electrode (AME), entre l'AME et la plaque 6, 66 correspondante. La figure 7 représente également, disposé sur la plaque 6 supérieure, un joint 14 de circuit de refroidissement et la plaque inférieure 66 de la cellule adjacente.

Comme visible notamment à la figure 6 en coupe transversale, le cadre 1 rigide est situé de préférence au milieu du cordon 2 d'étanchéité. De cette façon, le cadre 1 peut être placé à distance des éléments adjacents de l'empilement (cf. figures 6 et 7) et ainsi le cadre 1 n'est jamais en contact avec les gaz réactifs, les produits de réaction, le fluide de refroidissement et/ou la surface active de la cellule. Cela permet de réduire considérablement les contraintes de compatibilité chimique du cadre 1 rigide avec la pile et d'en réduire le coût de façon significative. Le cadre 1 rigide n'est donc pas en contact avec les éléments réactifs de la cellule car il est centré sur le cordon d'étanchéité et ne déborde pas dans les collecteurs de la cellule.

Le cordon 2 d'étanchéité a par exemple une épaisseur de chaque côté du cadre 1 préférentiellement comprise entre 0.2 mm et 2 mm donc une épaisseur globale préférentiellement comprise entre 0.4 mm et 4 mm. Le cordon 2 d'étanchéité a par exemple une largeur (dans le plan du cadre 1) comprise par exemple entre 2 et 3 mm.

La rigidité du cadre 1 permet un positionnement manuel facilité sur une plaque de pile ou sur un AME. Cette même rigidité permet d'envisager une automatisation du positionnement du joint lors de l'assemblage sans modification de celui-ci.

Comme visible à la figure 1, le cadre 1 comprend, de préférence à proximité de sa périphérie, des trous 10 de serrage prévus pour le passage du système de serrage de l'empilement, comme par exemple des tirants. Par exemple, le cadre 1 comprend quatre trous 10 de serrage disposés respectivement à proximité du milieu des quatre côtés cadre 1. La présence de trous 10 de serrage à travers le cadre 1 permet le cas échéant de s'affranchir de l'utilisation d'un promoteur d'adhérence avant le surmoulage du cordon 2 d'étanchéité et permet ainsi de préserver l'intégrité chimique de l'AME 5.

Le cadre 1 comprend également un ou des pions 12 de centrage et des trous de centrage 11. Ces pions 12 de centrage permettent un alignement de l'AME sur une plaque 6 de pile et inversement selon l'étape d'assemblage. Ces pions 12 de centrage permettent également un détrompage du joint 3 sur la plaque 6, 66 ainsi qu'un détrompage de l'AME sur la plaque 6, 66 pour que le coté anode de l'AME soit bien du coté de la plaque anodique et pour que le coté cathode de l'AME soit bien du coté de la plaque cathodique. Chaque dispositif d'étanchéité 3 comprend des trous 11 de centrage et des pions de centrage 12. De cette façon, et comme illustré à la figure 9, les pions 12 de centrage de l'un des dispositifs 3 d'étanchéité d'une cellule coopérant avec des trous 11 de centrage formés sur l'autre dispositif 3 d'étanchéité de la cellule (et inversement). Les pions 12 de centrage traversant des d'orifices formés au travers de l'Assemblage Membrane Electrodes 5 situé entre les deux dispositifs d'étanchéité. Comme illustré à la figure 9, le ou les pions 12 coopérant également avec un logement correspondant dans les plaques 6, 66 de la cellule.

Ceci permet de réaliser un alignement et un positionnement précis de l'AME 5 vis-à-vis des plaques 6, 66.

Comme visible aux figures 1 à 3, le dispositif 3 d'étanchéité comprend une pluralité d'ouvertures 7, 8, 9, 13 délimitées par le cordon 2 d'étanchéité. Ces ouvertures 7, 8, 9, 13 forment des passages respectifs pour des fluides. Par exemple, le dispositif comprend une pluralité d'ouvertures 7, 8, 9 périphériques formées autour d'une ouverture 13 centrale. L'ouverture centrale 13 est destinée à être superposée à une surface active d'un Assemblage Membrane Electrodes. Les ouvertures 7, 8, 9 périphériques comprennent par exemple deux ouvertures 7 diamétralement opposées formant des collecteurs respectivement d'entrée et de sortie pour de l'air, deux autres ouvertures 8 diamétralement opposées formant des collecteurs respectivement d'entrée et de sortie pour de l'hydrogène et deux paires d'ouvertures 9 opposées formant des collecteurs d'entrée/sortie pour le fluide de refroidissement.

Comme illustré, la bordure délimitant l'ouverture centrale 13 peut être commune avec des bordures respectives des ouvertures 7, 8, 9 périphériques. De préférence, comme visible aux figures 2 et 3, les portions de bordures communes à l'ouverture centrale 13 et aux ouvertures 7, 8, 9 périphériques sont constituées uniquement d'un cordon 2 d'étanchéité, c'est à dire que le cadre 1 n'est pas présent à ces endroits. Comme visible à la figure 5, cette configuration permet, en position assemblée, de disposer le cordon 2 d'étanchéité dans une gorge de joint d'une plaque 6 au plus près entre un collecteur et la surface active d'une cellule.

Comme visible à la figure 6, afin d'éviter une reprise de force par le cadre 1 lors du serrage de l'empilement et pour faciliter le positionnement du dispositif 3 d'étanchéité, la surface de la plaque 6 (par exemple monopolaire) en regard avec le cadre 1 peut être localement abaissée ou diminuée. Cela est possible de préférence uniquement pour les zones de la plaque qui s'étendent depuis la périphérie du cordon 2 d'étanchéité jusque vers l'extérieur de la cellule (vers la gauche sur la figure 5). En effet, un abaissement de la hauteur de la surface de la plaque 6 en regard avec l'AME risquerait de favoriser les fuites internes de gaz. De plus, afin d'isoler électriquement les deux plaques 6, 66 polaires entre lesquelles se trouve l'AME, et comme visible aux figures 6 et 7, les extrémités périphériques desdites plaques peuvent être biseautées. Ceci permet d'éviter de faire dépasser le joint de l'AME.et permet l'alignement des éléments de l'empilement lors du montage.

La figure 4 illustre de façon schématique une cellule élémentaire de pile à combustible comprenant deux plaques 6, 66 de pile polaires ou bipolaires prenant en sandwich un Assemblage Membrane Electrodes 5. Deux dispositifs 3 d'étanchéité tels que décrits ci-dessus sont disposés respectivement de part et d'autre de l'Assemblage Membrane Electrodes 5 et en vis-à-vis d'une plaque 6, 66 correspondante.

Les dispositifs 3 d'étanchéité assurent ainsi la séparation étanche des différents circuits de fluides réactifs au niveau de la cellule.

L'absence de contact avec l'AME 5 lors de l'assemblage diminue fortement les risques de contaminations chimiques du coeur de pile. L'architecture du dispositif et le cas échéant les matériaux utilisés y contribuent également.

En disposant le cadre 1 rigide à mi-hauteur du cordon 2 d'étanchéité, un dispositif 3 d'étanchéité identique peut être utilisé côté anodique et du côté cathodique. Le nombre de pièces constitutives différentes de la pile peut ainsi être réduit et les risques d'erreurs de montage sont diminués.

Dans une variante possible, les deux dispositifs 3 d'étanchéité des deux côtés de l'AME peuvent être reliés par un matériau flexible et former ainsi une seule pièce.

Par exemple, deux dispositifs 3 d'étanchéité sont rendus solidaires au niveau d'une jonction démontable (à l'extérieur ou au travers des pions 12 de centrage). Ceci permet d'emprisonner des éléments et former ainsi des sous-assemblages de pile à combustible.

On conçoit donc aisément que, tout en étant de structure simple et peu coûteuse, le dispositif permet à la fois
- de maintenir une distance constante entre deux plaques 6, 66 de pile (par exemple composites),
- d'assurer l'étanchéité et de réaliser un assemblage et un démontage aisé et précis de la pile à combustible.

Le dispositif est compatible avec différents AME

Le dispositif permet également un alignement de l'AME sur la plaque 6, 66 ou inversement (via le système de pions 12 et trous 11).

Ce type de dispositif d'étanchéité peut être utilisé également pour assurer l'étanchéité d'un réseau de refroidissement liquide.

## Revendications

1. Cellule élémentaire de pile à combustible comprenant deux plaques (6) de pile polaires ou bipolaires prenant en sandwich un Assemblage Membrane Electrodes (5), la cellule comprenant deux dispositifs (3) d'étanchéité disposés respectivement de part et d'autre de l'Assemblage Membrane Electrodes (5) et en vis-à-vis d'une plaque (6, 66) correspondante, pour assurer la séparation étanche des circuits de fluides réactifs au niveau de la cellule et assurer un écartement déterminé au sein de la cellule, chaque dispositif d'étanchéité étant constitué d'un cadre (1) rigide et d'un cordon (2) d'étanchéité solidaire du cadre (1), le cadre (1) muni du cordon (2) d'étanchéité définissant une pluralité d'ouvertures (7, 8, 9, 13) au travers du dispositif, les ouvertures étant délimitées par le cordon (2) d'étanchéité, **caractérisée en ce que** le cadre (1) de chaque dispositif d'étanchéité (3) comprend des trous (11) de centrage et des pions de centrage (12), les pions (12) de centrage de l'un des dispositif (3) d'étanchéité coopérant avec des trous (11) de centrage formés sur l'autre dispositif (3) d'étanchéité au travers d'orifices formés au travers de l'Assemblage Membrane Electrodes (5) pour assurer un centrage de l'Assemblage Membrane Electrode vis-à-vis des plaques (6, 66), **caractérisée en ce qu'**au moins une partie d'un bord délimitant au moins une ouverture (8, 9, 13) est constituée uniquement d'un cordon (2) d'étanchéité.

2. Cellule selon la revendication 1, **caractérisée en ce que** les deux dispositifs (3) d'étanchéité sont de structure identique.

3. Cellule selon l'une quelconque des revendications 1 ou 2, **caractérisée en ce que** les deux dispositifs (3) d'étanchéité sont solidaires au niveau d'une jonction souple pliable.

4. Cellule selon l'une quelconque des revendications 1 à 3, **caractérisé en ce que** les deux dispositifs (3) d'étanchéité sont rendus solidaires au niveau d'une jonction démontable.

5. Cellule selon l'une quelconque des revendications 1 à 4, **caractérisée en ce que** les périphéries des plaques (6, 66) situées en vis-à-vis présentent chacune une découpe, par exemple biseautée, au niveau de la bordure de l'AME.

6. Cellule selon l'une quelconque des revendications 1 à 5, **caractérisé en ce que** au moins un des pions (12) coopère avec un logement correspondant dans les plaques (6,66) de la cellule, c'est-à-dire que au moins un des pions (12) est reçu dans un logement de chaque plaque.

7. Cellule selon l'une quelconque des revendications 1 à 6, **caractérisé en ce que** chaque dispositif (3) d'étanchéité comprend deux pions (12) et deux trous de centrage.

8. Cellule selon l'une quelconque des revendications 1 à 7, **caractérisé en ce que** dans le plan du cadre (1) et par rapport au centre du cadre chaque pion (12) est disposé de façon symétrique à un trou (11) de centrage.

9. Cellule selon l'une quelconque des revendications 1 à 8, **caractérisée en ce que** le cadre (1) comprend en outre des trous (10) de serrage prévus pour le passage d'un système de serrage tel que des tirants.

10. Cellule selon l'une quelconque des revendications 1 à 9, **caractérisée en ce que** le dispositif d'étanchéité comporte des portions de cordon (2) d'étanchéité de part et d'autre du plan défini par le cadre (1) et **en ce que**, en section selon un plan perpendiculaire au plan du cadre (1), le cadre (1) est situé entre les extrémités du cordon (2) d'étanchéité situées de part et d'autre du plan du cadre (1).

11. Cellule élémentaire de pile à combustible selon l'une quelconque des revendications 1 à 10, **caractérisé en ce qu'**elle comprend deux plaques (6, 66) de pile polaires, utilisant au moins un dispositif (3) d'étanchéité positionné entre les deux faces des plaques dédiées au refroidissement.

12. Cellule selon l'une quelconque des revendications 1 à 11, **caractérisée** en ce quele dispositif d'étanchéité comprend une pluralité d'ouvertures (7, 8, 9) périphériques formées autour d'une ouverture (13) centrale, l'ouverture centrale (13) étant destinée à être superposée à une surface active d'un Assemblage Membrane Electrodes, au moins une partie de la bordure délimitant l'ouverture centrale (13) étant commune avec des bordures respectives des ouvertures (8, 9) périphériques et en ce que les portions de la bordures communes à l'ouverture centrale (13) et aux ouvertures (8, 9) périphériques sont constituée uniquement d'un cordon (2) d'étanchéité.

13. Cellule selon la revendication 12, **caractérisé en ce que** le dispositif d'étanchéité comporte au moins une paire d'ouvertures (7, 8, 9) périphériques adjacentes disposées respectivement le long de deux bords adjacents et perpendiculaire du cadre (1), les deux ouvertures (7, 8 , 9) périphériques adjacentes comportant une partie commune qui n'est pas commune à l'ouverture centrale (1) et constituée uniquement d'un cordon (2) d'étanchéité de sorte que le cordon d'étanchéité sans cadre à la forme d'un T au niveau desdites deux ouvertures périphériques (8, 9) adjacentes.

14. Pile à combustible, notamment du type à membrane échangeuse de protons, **caractérisée en ce qu'**elle comprend un empilement de plusieurs cellules élémentaires conformes à l'une quelconque des revendications 8 à 12.

## Patentansprüche

1. Brennstoffzellen-Einzelzelle, umfassend zwei polare oder bipolare Zellenplatten (6), zwischen denen sich eine Membran-Elektroden-Einheit (5) befindet, wobei die Zelle zwei jeweils auf beiden Seiten der Membran-Elektroden-Einheit (5) und gegenüber einer zugehörigen Platte (6, 66) zwei angeordnete Dichtvorrichtungen (3) umfasst, um für die dichte Trennung der Reaktionsflüssigkeitskreisläufe im Bereich der Zelle zu sorgen und für einen bestimmten Abstand in der Zelle zu sorgen, jede Dichtvorrichtung aus einem starren Rahmen (1) und einer mit dem Rahmen (1) fest verbundenen Dichtschnur (2) besteht, der mit der Dichtschnur (2) ausgestattete Rahmen (1) eine Vielzahl von Öffnungen (7, 8, 9, 13) durch die Vorrichtung festlegt, wobei die Öffnungen von der Dichtschnur (2) begrenzt sind, **dadurch gekennzeichnet, dass** der Rahmen (1) jeder Dichtvorrichtung (3) Zentrierlöcher (11) und Zentrierbolzen (12) umfasst, wobei die Zentrierbolzen (12) einer der Dichtvorrichtungen (3) über Öffnungen, die in der Membran-Elektroden-Einheit (5) gebildet sind, mit Zentrierlöchern (11), die an der anderen Dichtvorrichtung (3) gebildet sind, zusammenwirken, um für die Zentrierung der Membran-Elektroden-Einheit gegenüber den Platten (6, 66) zu sorgen, **dadurch gekennzeichnet, dass** mindestens ein Teil eines mindestens eine Öffnung (8, 9, 13) begrenzenden Rands ausschließlich aus einer Dichtschnur (2) besteht.

2. Zelle nach Anspruch 1, **dadurch gekennzeichnet, dass** die beiden Dichtvorrichtungen (3) eine identische Struktur aufweisen.

3. Zelle nach einem der Ansprüche 1 oder 2, **dadurch gekennzeichnet, dass** die beiden Dichtvorrichtungen (3) an einem flexiblen biegsamen Verbindungspunkt fest verbunden sind.

4. Zelle nach einem der Ansprüche 1 bis 3, **dadurch gekennzeichnet, dass** die beiden Dichtvorrichtungen (3) an einem ausbaubaren Verbindungspunkt fest verbunden werden.

5. Zelle nach einem der Ansprüche 1 bis 4, **dadurch gekennzeichnet, dass** die Umfänge der gegenüberliegenden Platten (6, 66) jeweils einen, beispielweise angeschrägten, Schnitt im Bereich des Rands der MEA aufweisen.

6. Zelle nach einem der Ansprüche 1 bis 5, **dadurch gekennzeichnet, dass** mindestens einer der Bolzen (12) mit einer entsprechenden Fassung in den Platten (6,66) der Zelle zusammenwirkt, das heißt, dass mindestens einer der Bolzen (12) in einer Fassung jeder Platte aufgenommen wird.

7. Zelle nach einem der Ansprüche 1 bis 6, **dadurch gekennzeichnet, dass** jede Dichtvorrichtung (3) zwei Bolzen (12) und zwei Zentrierlöcher umfasst.

8. Zelle nach einem der Ansprüche 1 bis 7, **dadurch gekennzeichnet, dass** in der Ebene des Rahmens (1) und in Bezug auf das Zentrum des Rahmens jeder Bolzen (12) symmetrisch zu einem Zentrierloch (11) angeordnet ist.

9. Zelle nach einem der Ansprüche 1 bis 8, **dadurch gekennzeichnet, dass** der Rahmen (1) weiter Spannlöcher (10) zur Durchführung eines Spannsystems, wie Anker, umfasst.

10. Zelle nach einem der Ansprüche 1 bis 9, **dadurch gekennzeichnet, dass** die Dichtvorrichtung auf beiden Seiten der vom Rahmen (1) definierten Ebene Dichtschnur(2)-Teile umfasst und dass der Rahmen (1) in einem Querschnitt in einer zur Ebene des Rahmens (1) senkrechten Ebene zwischen den Enden der Dichtschnur (2) liegt, die zu beiden Seiten der Ebene des Rahmens (1) liegen.

11. Brennstoffzellen-Einzelzelle nach einem der Ansprüche 1 bis 10, **dadurch gekennzeichnet, dass** sie zwei polare Zellenplatten (6, 66) umfasst, die mindestens eine zwischen den beiden Seiten der für die Kühlung bestimmten Platten angeordnete Dichtvorrichtung (3) verwenden.

12. Zelle nach einem der Ansprüche 1 bis 11, **dadurch gekennzeichnet, dass** die Dichtvorrichtung eine Vielzahl von um eine zentrale Öffnung (13) gebildete umlaufende Öffnungen (7, 8, 9) umfasst, wobei die zentrale Öffnung (13) dazu bestimmt ist, über eine aktive Oberfläche einer Membran-Elektroden-Einheit gelegt zu werden, und mindestens ein Teil des die zentrale Öffnung (13) begrenzenden Rands mit den jeweiligen Rändern der umlaufenden Öffnungen (8, 9) gemeinsam ist, sowie dadurch, dass die gemeinsamen Randteile der zentralen Öffnung (13) und der umlaufenden Öffnungen (8, 9) nur aus einer Dichtschnur (2) bestehen.

13. Zelle nach Anspruch 12, **dadurch gekennzeichnet, dass** die Dichtvorrichtung mindestens ein Paar umlaufender angrenzender Öffnungen (7, 8, 9), die jeweils entlang zweier angrenzender und senkrechter Ränder des Rahmens (1) angeordnet sind, umfasst, wobei die beiden umlaufenden angrenzenden Öffnungen (7, 8, 9) einen gemeinsamen Teil, den sie nicht mit der zentralen Öffnung (1) teilen und der nur aus einer Dichtschnur (2) besteht, umfassen, so dass die Dichtschnur ohne Rahmen im Bereich der beiden angrenzenden umlaufenden Öffnungen (8, 9) die Form eines T aufweist.

14. Brennstoffzelle, insbesondere vom Typ Protonenaustauschmembran, **dadurch gekennzeichnet, dass** sie eine Stapelung aus mehreren Einzelzellen nach einem der Ansprüche 8 bis 12 umfasst.

## Claims

1. Elementary fuel cell unit comprising two polar or bipolar cell plates (6) sandwiching an Electrode Membrane Assembly (5), with the unit comprising two leakproofing devices (3) arranged respectively on either side of the Electrode Membrane Assembly (5) and facing a corresponding plate (6, 66), in order to provide the sealed separation of the reagent fluid circuits on the unit and to provide a determined separation in the unit, with each leakproofing device being comprised of a rigid frame (1) and of a leakproofing seal (2) integral with the frame (1), the frame (1) provided with the leakproofing seal (2) defining a plurality of apertures (7, 8, 9, 13) through the device, with the apertures being delimited by the leakproofing seal (2), **characterised in that** the frame (1) of each leakproofing device (3) comprises centring holes (11) and centring pins (12), with the centring pins (12) of one of the leakproofing devices (3) cooperating with centring holes (11) formed on the other leakproofing device (3) through orifices formed through the Electrode Membrane Assembly (5) in order to provide a centring of the Electrode Membrane Assembly with respect to the plates (6, 66), **characterised in that** at least one portion of an edge delimiting at least one aperture (8, 9, 13) is comprised solely of a leakproofing seal (2).

2. Unit according to claim 1, **characterised in that** the two leakproofing devices (3) are of identical structure.

3. Unit according to any of claims 1 or 2, **characterised in that** the two leakproofing devices (3) are integral on a foldable flexible junction.

4. Unit according to any of claims 1 to 3, **characterised in that** the two leakproofing devices (3) are made integral on a junction that can be disassembled.

5. Unit according to any of claims 1 to 4, **characterised in that** the peripheries of the plates (6, 66) located facing each have a cut-out, for example bevelled, on the edge of the EMA.

6. Unit according to any of claims 1 to 5, **characterised in that** at least one of the pins (12) cooperates with a corresponding housing in the plates (6, 66) of the unit, i.e. at least one of the pins (12) is received in a housing of each plate.

7. Unit according to any of claims 1 to 6, **characterised in that** each leakproofing device (3) comprises two pins (12) and two centring holes.

8. Unit according to any of claims 1 to 7, **characterised in that** in the plane of the frame (1) and with respect to the centre of the frame each pin (12) is arranged symmetrically to a centring hole (11).

9. Unit according to any of claims 1 to 8, **characterised in that** the frame (1) further comprises tightening holes (10) provided for the passage of a tightening system such as tie bars.

10. Unit according to any of claims 1 to 9, **characterised in that** the leakproofing device comprises portions of leakproofing seal (2) on either side of the plane defined by the frame (1) and **in that**, in the section according to a plane perpendicular to the plane of the frame (1), the frame (1) is located between the ends of the leakproofing seal (2) located on either side of the plane of the frame (1).

11. Elementary fuel cell unit according to any of claims 1 to 10, **characterised in that** it comprises two plates (6, 66) of polar cells, using at least one leakproofing device (3) positioned between the two faces of the plates dedicated to cooling.

12. Unit according to any of claims 1 to 11, **characterised in that** the leakproofing device comprises a plurality of peripheral apertures (7, 8, 9) formed around a central aperture (13), with the central aperture (13) being intended to be superimposed on an active surface of an Electrode Membrane Assembly, at least one portion of the edge delimiting the central aperture (13) being common with the respective edges of the peripheral apertures (8, 9) and **in that** the portions of the edges common to the central aperture (13) and to the peripheral apertures (8, 9) are comprised solely of a leakproofing seal (2).

13. Unit according to claim 12, **characterised in that** the leakproofing device comprises at least one pair of adjacent peripheral apertures (7, 8, 9) arranged respectively along the two adjacent and perpendicular edges of the frame (1), with the two adjacent peripheral apertures (7, 8 , 9) comprising a common portion which is not common to the central aperture (1) and comprised solely of a leakproofing seal (2) in such a way that the leakproofing seal without a frame has the shape of a T on said two adjacent peripheral apertures (8, 9).

14. Fuel cell, in particular of the proton exchange membrane type, **characterised in that** it comprises a stack of several elementary units in accordance with any of claims 8 to 12.
